# FASCICULE DE BREVET EUROPEEN

(11) **EP 4 182 126 B1**
(45) Date de publication et mention de la délivrance du brevet: **20.03.2024**
(21) Numéro de dépôt: 21732421.9
(22) Date de dépôt: 03.05.2021
(51) Int. Cl.: B25J 9/16, B25J 11/00, B25J 19/02, G06T 17/00, B24B 9/00

(54) **CONTRÔLE AUTOMATIQUE D'UN SYSTÈME D'ÉBAVURAGE DE PIÈCES**
VERFAHREN ZUR AUTOMATISCHEN ÜBERWACHUNG EINES ENTGRATUNGSSYSTEMS FÜR WERKSTÜCKE
METHOD FOR AUTOMATIC MONITORING OF A SYSTEM FOR DEBURRING PARTS

(30) Priorité: 16.07.2020 FR 2007462
(43) Date de publication de la demande: 24.05.2023
(73) Titulaire: Inbolt, 91430 Igny (FR)
(72) Inventeur: COHEN, Rudy, 75015 PARIS (FR); DUMAS, Louis, 91430 IGNY (FR); DERSY, Albane, 92200 NEUILLY SUR SEINE (FR); PORTIER, Thibault, 75015 PARIS (FR)
(74) Mandataire: Ipsilon
(86) Numéro de dépôt international: PCT/FR2021/050763
(87) Numéro de publication internationale: WO 2022/013486

(56) Documents cités:
- US-A1- 2015 005 923
- US-A1- 2017 129 066
- US-A1- 2018 161 952
- US-A1- 2018 361 575
- US-B2- 8 706 300

## Description

### Domaine technique

La présente invention concerne de manière générale les procédés et systèmes automatisés d'ébavurage de pièces, et plus particulièrement un procédé et un dispositif électronique de contrôle automatique d'un système d'ébavurage, particulièrement adaptés pour permettre un ébavurage de pièces spécifiques comprenant chacune au moins un profilé.

### Arrière-plan technologique

Lorsque l'on fabrique une pièce, il est fréquent de voir apparaître des petites bavures. Ces bavures sont des surplus non désirés de la matière usinée, souvent de faible épaisseur. Elles peuvent être tranchantes et causer des potentiels problèmes d'assemblage. L'ébavurage est l'opération qui consiste à enlever cet excès de matière non désiré.

Les pièces auxquelles la présente invention s'intéresse plus particulièrement sont toutes les pièces usinées comportant au moins un profilé s'étendant selon un axe longitudinal et dont une extrémité a été préalablement coupée par un outil de coupe selon une géométrie de coupe et un angle de coupe par rapport à l'axe longitudinal du profilé.

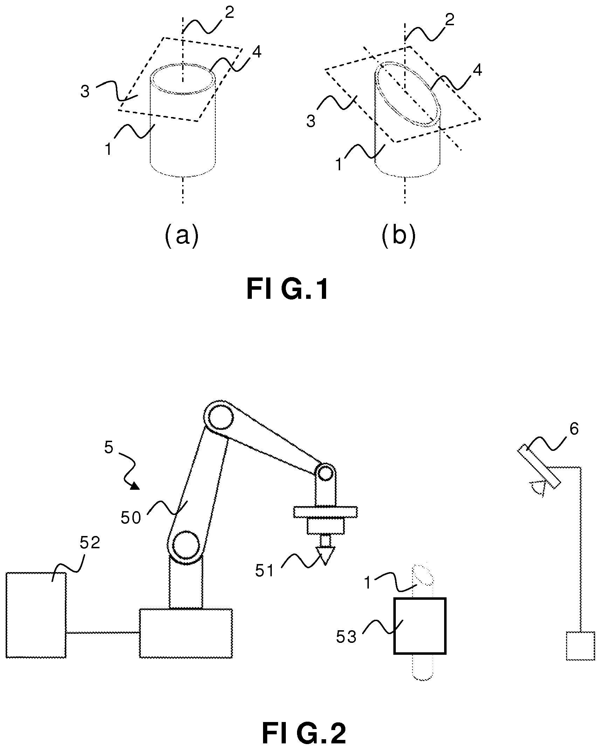

En effet, dans l'industrie automobile notamment, il est fréquent d'avoir à ébavurer des contours et/ou arêtes à l'extrémité de profilés pleins ou creux (par exemple des tubes pour pots d'échappement) suite à des découpes qui ont été effectuées selon une géométrie de coupe donnée (par exemple selon un plan de coupe ou un cylindre de coupe), et selon un angle de coupe donné. La figure 1 illustre schématiquement, à titre d'exemple non limitatif, une première vue (a) sur laquelle l'extrémité d'un profilé cylindrique creux 1 d'axe longitudinal 2 a été coupée selon un plan de coupe 3 perpendiculaire à l'axe longitudinal 2, et une deuxième vue (b) sur laquelle l'extrémité de ce même profilé cylindrique 1 a été coupée selon un plan de coupe 3 incliné par rapport à l'axe longitudinal 2. Dans le cas de la vue (a), la surface 4 de l'extrémité est un anneau circulaire s'étendant dans un plan horizontal, alors que dans le cas de la vue (b), la surface 4 de l'extrémité est un anneau elliptique s'étendant dans un plan incliné. Dans les deux cas, la surface 4 comporte deux arêtes ou contours (contour interne et contour externe de la surface 4) à ébavurer.

De tels profilés peuvent avoir des sections de formes géométriques diverses (carré, triangle, disque, cercle, rectangle, octogone, losange, trapèze, ovale, ellipse, pentagone et hexagone), et de tailles variables. Par exemple, les tubes creux cylindriques utilisés pour des pots d'échappement peuvent avoir des diamètres extérieurs et intérieurs très variables. Par ailleurs, les géométries de coupe et angles de coupe utilisés peuvent également être différents d'un profilé à l'autre.

Plusieurs solutions ont déjà été proposées dans l'industrie afin d'automatiser des processus d'ébavurage de pièces.

Ainsi, des robots automatisés ont été développés afin de pouvoir réaliser des opérations d'ébavurage selon une trajectoire d'ébavurage entièrement pré-programmée. Ce type de robot n'est adapté qu'à l'ébavurage de pièces identiques fournies à la chaîne, pour lesquelles une trajectoire d'ébavurage a été spécifiquement déterminée a priori, et ne convient donc pas pour des processus d'ébavurage à la chaîne de pièces dont les profilés à ébavurer sont variables en dimension et/ou en forme.

D'autres systèmes intelligents d'ébavurage, tels que celui décrit dans le document US 20150005923, reposent sur l'utilisation de modélisations tridimensionnelles théoriques de la pièce à ébavurer et de la portion spécifique à ébavurer, ces modélisations tridimensionnelles étant stockées au préalable dans le système. Un programme est alors généré automatiquement par un contrôleur du robot à partir de ces modélisations, pour déterminer la posture qui devra être adoptée par un outil d'ébavurage lors du processus d'ébavurage, ainsi que la trajectoire à suivre par cet outil d'ébavurage. Lorsqu'une pièce à ébavurer est finalement placée dans le système, un capteur visuel du système est utilisé pour détecter la position réelle de la portion à ébavurer sur la pièce à partir de sa modélisation tridimensionnelle théorique et pour corriger si nécessaire la posture de l'outil d'ébavurage et la trajectoire d'ébavurage pendant le processus d'ébavurage. Pendant l'ébavurage, le robot est en outre commandé en fonction du contrôle d'une force exercée sur l'outil d'ébavurage. Ici encore, le système est peu adapté à la grande diversité des découpes et profilés susceptibles d'être concernés car il faudrait générer et mémoriser dans le système autant de modélisations tridimensionnelles théoriques que de pièces à ébavurer.

On connaît également du document US 8, 706, 300 un système d'ébavurage qui permet de générer la trajectoire d'ébavurage à suivre par un outil d'ébavurage à partir d'une image de la pièce à ébavurer capturée par un système de vision. Plus précisément, l'image est traitée de manière à extraire un élément critique, tel qu'une bavure ou une mauvaise soudure, ou une ligne directrice préalablement tracée sur la pièce. La solution décrite est complexe et peu adaptée aux pièces comportant des profilés de taille et/ou de forme variables.

### Résumé de l'invention

Afin de remédier aux inconvénients précités, la présente invention a pour objet un procédé de contrôle automatique d'un système d'ébavurage de pièces comprenant un bras robotisé portant un outil d'ébavurage, et un contrôleur du bras robotisé apte à commander un déplacement de l'outil d'ébavurage lors d'une opération d'ébavurage, ledit procédé comportant les étapes suivantes :
- fixer au moins une pièce à ébavurer à un dispositif de calage dudit système d'ébavurage, ladite au moins une pièce à ébavurer comprenant au moins un profilé s'étendant selon un axe longitudinal et dont une extrémité a été préalablement coupée par un outil de coupe selon une géométrie de coupe et un angle de coupe par rapport à l'axe longitudinal du profilé;
- scanner in situ ladite pièce à ébavurer au moyen d'un dispositif de vision tridimensionnelle de façon à générer un nuage de points à partir d'au moins une numérisation représentative de ladite pièce à ébavurer pour une position donnée du dispositif de vision tridimensionnel;
- déterminer, à partir du nuage de points, une première modélisation tridimensionnelle représentative du profilé avant coupe;
- déterminer, à partir du nuage de points, une deuxième modélisation tridimensionnelle représentative de la géométrie de coupe orientée selon l'angle de coupe;
- déterminer une troisième modélisation tridimensionnelle représentative d'au moins un contour de l'extrémité du profilé à ébavurer par calcul de l'intersection géométrique entre la première modélisation tridimensionnelle et la deuxième modélisation tridimensionnelle;
- sélectionner un sous-ensemble de points dans la troisième modélisation tridimensionnelle représentative dudit au moins un contour ;
- commander le déplacement de l'outil d'ébavurage selon une trajectoire d'ébavurage déterminée à partir du sous-ensemble de points sélectionnés.

Selon d'autres caractéristiques avantageuses et non limitatives du procédé conforme à l'invention, l'étape de détermination de la deuxième modélisation tridimensionnelle représentative de la géométrie de coupe orientée selon l'angle de coupe peut comprendre :
- une sous-étape de segmentation de la première modélisation tridimensionnelle représentative du profilé avant coupe en une pluralité de zones réparties angulairement autour de l'axe longitudinal du profilé;
- la recherche, dans chaque zone, du point du nuage de points situé le plus haut le long de l'axe longitudinal du profilé.

Dans un exemple non limitatif d'implémentation, lors de l'étape de scan, plusieurs numérisations représentatives de la pièce à ébavurer sont acquises pour différentes positions et/ou orientations du dispositif de vision tridimensionnelle par rapport à ladite pièce, les nuages de points associés aux numérisations acquises étant fusionnés pour générer ledit nuage de points.

Dans un exemple d'implémentation, au moins les étapes de scan, de déterminations de la première, deuxième et troisième modélisations tridimensionnelles, et de sélection d'un sous-ensemble de points sont réalisées par un dispositif électronique de contrôle automatique apte à coopérer avec le système d'ébavurage de pièces ; dans ce cas, le procédé comprend en outre une étape de transmission, par le dispositif électronique de contrôle automatique vers le système d'ébavurage de pièces, du sous-ensemble de points sélectionnés dans la troisième modélisation tridimensionnelle, et une étape de détermination, par le contrôleur du bras robotisé, de la trajectoire d'ébavurage à partir du sous-ensemble de points sélectionnés transmis.

La présente invention a également pour objet un dispositif électronique de contrôle automatique d'un système d'ébavurage de pièces, ledit système comprenant un bras robotisé portant un outil d'ébavurage, et un contrôleur du bras robotisé apte à commander un déplacement de l'outil d'ébavurage lors d'une opération d'ébavurage, ledit dispositif électronique étant caractérisé en ce qu'il comporte:
- un dispositif de vision tridimensionnelle apte à acquérir in situ au moins une numérisation représentative d'au moins une pièce à ébavurer fixée à un dispositif de calage dudit système d'ébavurage, ladite au moins une pièce à ébavurer comprenant au moins un profilé s'étendant selon un axe longitudinal et dont une extrémité a été préalablement coupée par un outil de coupe selon une géométrie de coupe et un angle de coupe par rapport à l'axe longitudinal du profilé;
- une unité de traitement configurée pour :
   - générer un nuage de points de ladite au moins numérisation acquise,
   - déterminer, à partir du nuage de points, une première modélisation tridimensionnelle représentative du profilé avant coupe,
   - déterminer, à partir du nuage de points, une deuxième modélisation tridimensionnelle représentative de la géométrie de coupe orientée selon l'angle de coupe,
   - déterminer une troisième modélisation tridimensionnelle représentative d'au moins un contour de l'extrémité du profilé à ébavurer par calcul de l'intersection géométrique entre la première modélisation tridimensionnelle et la deuxième modélisation tridimensionnelle, et
   - sélectionner un sous-ensemble de points dans la troisième modélisation tridimensionnelle représentative dudit au moins un contour; et
- un module de communication configuré pour transmettre le sous-ensemble de points sélectionnés au système d'ébavurage pour permettre la détermination d'une trajectoire d'ébavurage à suivre par l'outil d'ébavurage.

Dans un mode de réalisation possible, le dispositif électronique est en outre configuré pour être fixé au bras robotisé de manière à pouvoir être déplacé selon une trajectoire prédéfinie autour de la pièce à ébavurer, et pour contrôler le dispositif de vision tridimensionnelle de manière à acquérir une succession de numérisations représentatives de la pièce à ébavurer lors du déplacement du dispositif électronique selon ladite trajectoire prédéfinie, et l'unité de traitement est configurée pour générer le nuage de points en fusionnant les numérisations de ladite succession de numérisation.

Dans ce cas, chaque numérisation de la succession de numérisations étant prise de préférence à une position d'arrêt du dispositif électronique lors de son déplacement selon la trajectoire prédéfinie, le dispositif électronique comporte en outre un dispositif de détection de chaque position d'arrêt.

Le dispositif de détection des positions d'arrêt peut comprendre une centrale inertielle, ou une caméra RGB.

Dans un mode de réalisation possible le dispositif de vision tridimensionnelle est une caméra de profondeur, chaque numérisation acquise étant une image capturée par la caméra de profondeur.

En variante, le dispositif de vision tridimensionnelle est un scanner de profil.

Dans des modes de réalisation possibles, le module de communication est apte à échanger des données avec le système d'ébavurage par l'intermédiaire d'une liaison filaire ou sans fil.

Le module de communication est par exemple apte à échanger des données avec le système d'ébavurage selon le protocole TCP/IP.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
- [fig. 1] La figure 1, déjà décrite ci-avant, illustre deux profilés cylindriques creux ayant subi des coupes selon deux plans différents;
- [fig. 2] La figure 2 illustre schématiquement un dispositif de contrôle coopérant avec un système d'ébavurage de pièces selon une première architecture possible conforme aux principes de l'invention;
- [fig. 3] La figure 3 illustre schématiquement un dispositif de contrôle coopérant avec un système d'ébavurage de pièces selon une deuxième architecture possible conforme aux principes de l'invention;
- [fig. 4] La figure 4 illustre sous forme fonctionnelle un dispositif électronique de contrôle d'un système d'ébavurage de pièces selon un mode de réalisation possible de l'invention;
- [fig. 5] La figure 5 illustre des étapes d'un procédé de contrôle d'un système d'ébavurage de pièces conforme à l'invention;
- [fig. 6] La figure 6 représente trois vues illustrant le principe de fusion de nuages de points ;
- [fig. 7] La figure 7 représente sept vues illustrant un exemple de résultats obtenus au cours ou à l'issue de certaines étapes du procédé de la figure 5 ;
- [fig. 8] La figure 8 illustre un principe possible de sélection d'un sous-ensemble de points pour permettre la détermination d'une trajectoire d'ébavurage à suivre par l'outil d'ébavurage.

### Description de mode(s) de réalisation

Dans les figures, les éléments identiques ou équivalents porteront les mêmes signes de référence.

Dans la suite, l'invention va être décrite à titre non limitatif dans le cadre de l'ébavurage d'une pièce du type de celles représentées sur la figure 1, comprenant un unique profilé cylindrique creux 1 dont une extrémité a été coupée au préalable selon un plan de coupe 3 incliné par rapport à l'axe longitudinal 2 du profilé. Bien entendu, l'invention est applicable à n'importe quelle forme géométrique définissant la section d'un profilé (carré, triangle, disque, cercle, rectangle, octogone, losange, trapèze, ovale, ellipse, pentagone ou hexagone). Par ailleurs, l'invention est également applicable à d'autres types de géométrie de coupe, par exemple un cylindre.

La figure 2 représente schématiquement les composantes d'un système 5 d'ébavurage que l'on souhaite pouvoir contrôler automatiquement pour l'ébavurage du profilé 1. Ce système 5 d'ébavurage comprend classiquement un bras robotisé 50 portant un outil 51 d'ébavurage, et un contrôleur 52 du bras robotisé 50 apte à commander un déplacement de l'outil 51 d'ébavurage lors d'une opération d'ébavurage. Le système 5 d'ébavurage comporte en outre un dispositif 53 de calage permettant de maintenir le profilé 1 dans une posture fixe. Le dispositif 53 de calage peut être par exemple un support ou un étau.

Conformément à une mise en oeuvre possible de l'invention, le contrôle automatique du système 5 d'ébavurage pour l'ébavurage de contours de l'extrémité supérieure du profilé 1 va consister essentiellement à scanner in situ le profilé 1, au moyen d'un dispositif de vision tridimensionnelle, pour acquérir au moins une numérisation représentative du profilé 1 (par exemple une ou plusieurs images capturées par une caméra de profondeur, ou une pluralité de scans acquis par un scanner de profil), puis à traiter la ou les numérisations acquises de façon à extraire in situ et en temps réel :
- d'une part, une modélisation tridimensionnelle du profilé avant coupe (en l'occurrence, dans l'exemple choisi, un cylindre creux) ;
- d'autre part, une modélisation tridimensionnelle de la géométrie et de l'angle de coupe (en l'occurrence, dans l'exemple choisi, un plan de coupe incliné).
Une modélisation tridimensionnelle très précise du ou des contours à ébavurer (ici le contour externe et le contour interne d'un anneau elliptique incliné) est alors déterminée en calculant l'intersection entre les deux modélisations tridimensionnelles extraites. Un sous-ensemble de points sélectionnés dans la modélisation tridimensionnelle du ou des contours à ébavurer permet par suite de déterminer la trajectoire d'ébavurage adaptée à ce ou ces contours, puis à commander le déplacement de l'outil 51 d'ébavurage selon cette trajectoire d'ébavurage.

Dans un mode d'implémentation non limitatif particulièrement avantageux, les étapes de scan et la partie du traitement des numérisations permettant d'extraire le sous-ensemble de points sélectionnés dans la modélisation tridimensionnelle du ou des contours à ébavurer sont réalisées par un dispositif électronique 6 de contrôle automatique distinct du système 5 d'ébavurage, et apte à coopérer avec le système 5 d'ébavurage.

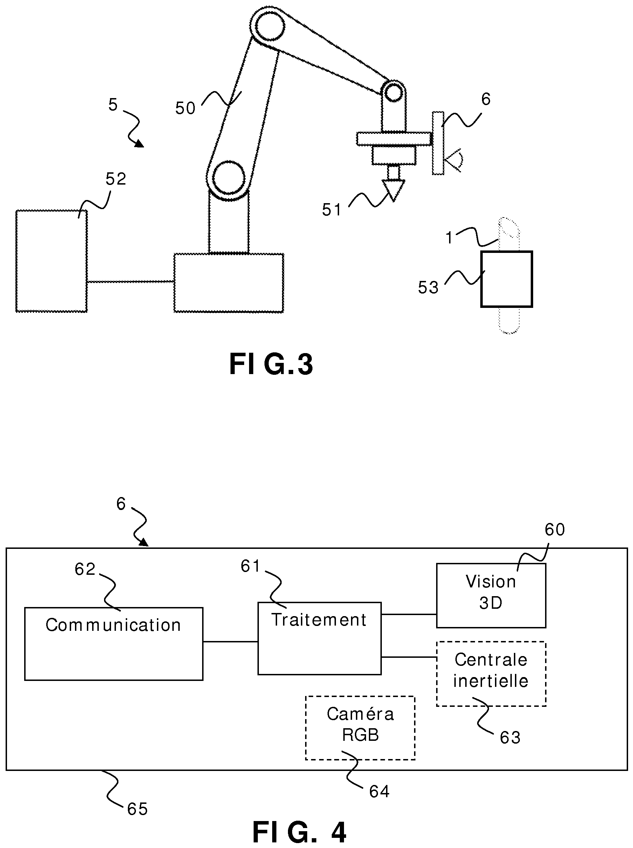

Dans le mode de réalisation non limitatif de la figure 2, le dispositif électronique 6 de contrôle automatique du système 5 d'ébavurage se présente sous la forme d'un boîtier disposé par exemple en haut d'une potence. En variante, comme illustré sur la figure 3, le dispositif électronique 6 de contrôle automatique du système 5 d'ébavurage est fixé sur le bras robotisé 50, pour des raisons qui apparaîtront par la suite. Dans tous les cas, le dispositif électronique est calibré de façon à mémoriser, dans une mémoire de stockage (non représentée) du dispositif électronique 6, différents paramètres nécessaires au traitement (notamment la position et l'orientation initiales du dispositif de vision tridimensionnelle du dispositif électronique 6 par rapport à un repère tridimensionnel fixe du système 5).

La figure 4 représente, sous forme fonctionnelle un mode de réalisation possible du dispositif électronique 6 de contrôle automatique du système 5 d'ébavurage. Le dispositif électronique 6 comporte un dispositif 60 de vision tridimensionnelle apte à réaliser des scans pour l'acquisition de numérisations , une unité 61 de traitement des numérisations acquises par le dispositif 60 de vision tridimensionnelle, et un module 62 de communication configuré pour communiquer avec le système 5 d'ébavurage.

Le dispositif 60 de vision tridimensionnelle est par exemple une caméra de profondeur, laquelle peut être une caméra de type stéréoscopique, ou une caméra fonctionnant sur le principe du temps de vol (ou caméra TOF, initiales anglo-saxonnes mises pour Time Of Flight), ou encore une caméra dite à lumière structurée. Dans ce cas, les numérisations acquises sont directement des images capturées par a caméra de profondeur.

En variante, adaptée à la seule configuration de la figure 3, le dispositif 60 de vision tridimensionnelle est un scanner de profil (encore appelé scanner laser), faisant appel au principe de la triangulation laser pour la détection tridimensionnelle de profils sur des surfaces les plus diverses.

Le module 62 de communication peut échanger des données avec le système 5 d'ébavurage par l'intermédiaire de toute liaison de communication, filaire (Ethernet...) ou sans fil (Wifi, Bluetooth...). Dans un mode de réalisation possible, les données sont communiquées selon le protocole TCP/IP.

De façon optionnelle, le dispositif électronique 6 peut comprendre également une centrale inertielle 63 et/ou une caméra RGB 64, dont les rôles, lorsqu'elles sont présentes, seront explicités ultérieurement.

L'utilisation du dispositif électronique 6 dans lequel le dispositif 60 de vision tridimensionnelle, l'unité 61 de traitement, le module 62 de communication et, le cas échéant, la centrale inertielle 63 et/ou la caméra RGB 64 sont réunis au sein d'un même boîtier 65 est préférée car elle permet d'offrir une solution qui s'adapte très simplement à tout système 5 d'ébavurage pré existant. Néanmoins, les principes de traitement qui vont être explicités ci-après peuvent également être appliqués aux architectures dans lesquelles l'unité 61 de traitement est déportée par rapport la caméra de profondeur, voire intégrée au niveau du contrôleur 62 du bras robotisé 50.

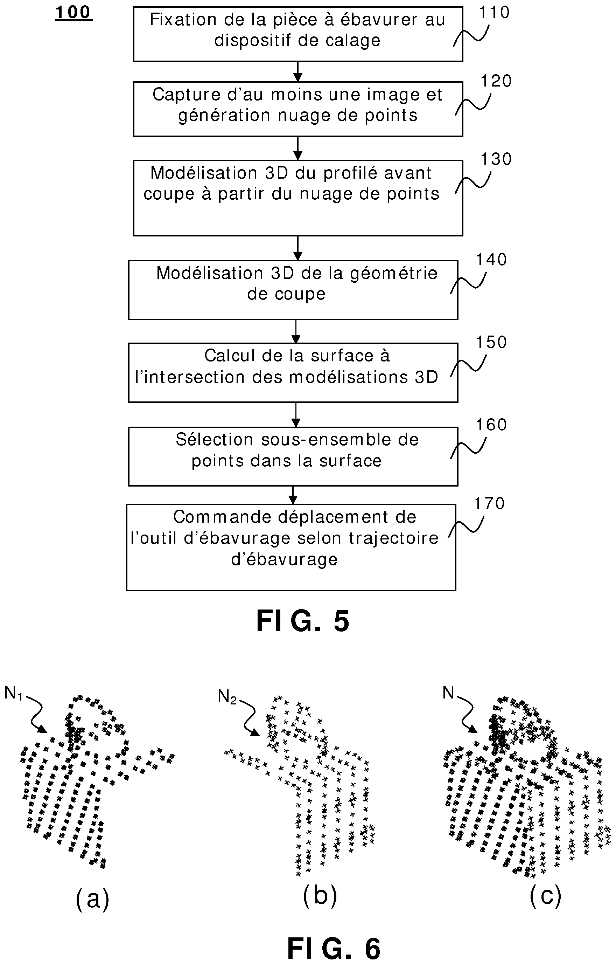

Des étapes d'un procédé 100 conforme à l'invention dans le cadre du contrôle du système d'ébavurage 5 par le dispositif électronique 6, vont à présent être explicitées en référence aux figures 5 à 7, dans le cas où le dispositif 60 de vision tridimensionnelle est une caméra de profondeur.

Le profilé 1 à ébavurer est tout d'abord fixé (étape 110) au dispositif 53 de calage du système 5 d'ébavurage.

Au moins une image est ensuite capturée par la caméra 60 de profondeur, à partir de laquelle l'unité de traitement 61 va générer un nuage de points (étape 120). La vue (a) de la figure 6 illustre un exemple d'un nuage N₁ de points généré à partir d'une image de profondeur capturée par la caméra 60 de profondeur. Dans un mode d'implémentation possible, plusieurs images du profilé 1 sont prises pour différentes positions et/ou orientations de la caméra 60 de profondeur par rapport à ladite pièce. Les différents nuages de points associés aux images capturées sont alors fusionnés pour générer le nuage de points qui va subir le traitement. Ainsi, la vue (b) sur la figure 6 illustre un deuxième nuage N₂ de points généré à partir d'une deuxième image de profondeur capturée pour une deuxième position et/ou orientation de la caméra 60 de profondeur, et la vue (c) illustre le nuage N de points résultant de la fusion entre les nuages de points N₁ et N₂.

Il convient de noter que l'architecture illustrée sur la figure 3 est tout à fait adaptée à ce mode d'implémentation possible de l'invention. En effet, le dispositif électronique 6 étant fixé au bras robotisé 50, il est possible de prévoir, dans le contrôleur 52 du bras robotisé 50, un programme simple permettant de déplacer le dispositif électronique 6 selon une trajectoire prédéfinie (par exemple circulaire) autour du profilé à ébavurer, et de contrôler la caméra 60 de profondeur de manière à capturer une succession d'images lors du déplacement du dispositif électronique 6 selon la trajectoire prédéfinie. Chaque image de la succession d'images est de préférence prise à une position d'arrêt du dispositif électronique 6 lors de son déplacement selon la trajectoire prédéfinie. Chaque position d'arrêt doit être connue par le dispositif électronique 6 de manière que les nuages de points associés puissent être fusionnés dans un repère tridimensionnel lié à au moins l'une des positions de capture d'image. Les positions d'arrêt peuvent être communiquées au dispositif électronique 6 par le contrôleur 52 du système 5 d'ébavurage. En variante particulièrement avantageuse, le dispositif électronique 6 comporte son propre dispositif de détection de chaque position d'arrêt. Cela lui permet d'associer chaque prise de vue à chaque position/orientation de la caméra 60 de profondeur sans avoir à communiquer avec le contrôleur 52. Cette variante permet ainsi non seulement de réduire la bande passante pour les données échangées, mais aussi de réduire significativement les temps d'arrêt. Le dispositif de détection d'arrêt peut comprendre par exemple la centrale inertielle 63. En variante, le dispositif de détection d'arrêt peut comprendre la caméra RGB 64, cette dernière étant alors configurée pour capturer des images en continu pendant le déplacement du dispositif électronique 6. L'unité 61 de traitement peut ainsi déduire chaque position d'arrêt, par exemple en comparant des erreurs quadratiques moyennes obtenues sur les niveaux de gris de deux images successives.

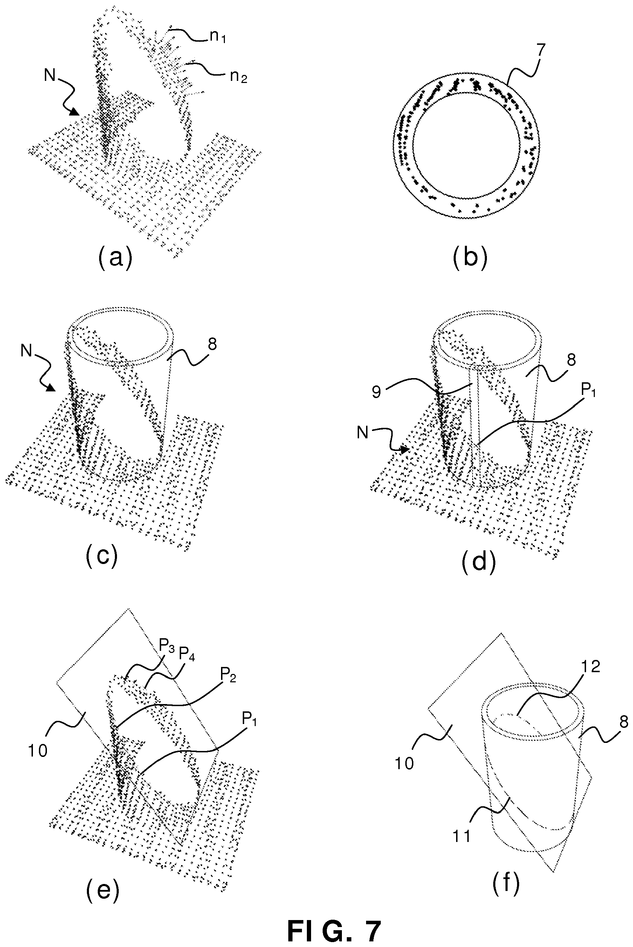

Quelle que soit la manière avec laquelle le nuage N de points est obtenu (à partir d'une seule image ou par fusion de plusieurs nuages de points associés à différentes prises de vue), ce nuage N de points est ensuite traité de la façon suivante, explicitée en référence à la figure 7 qui montrent plusieurs vues (a) à (f) résultant d'étapes successives réalisées à partir d'un exemple de nuage N de points:

L'unité 61 de traitement commence par déterminer (étape 130 sur la figure 5), à partir du nuage N de points, une première modélisation tridimensionnelle 8 représentative du profilé avant coupe (voir vues (a) à (c) de la figure 7).

Pour ce faire, l'unité 61 de traitement peut par exemple en premier lieu extraire du nuage N de points un vecteur directeur représentatif de l'axe longitudinal 2 du profilé 1. L'extraction du vecteur directeur peut être faite par toute méthode connue, par exemple celle qui consiste à rechercher les normales au nuage N de points (telles que les normales n₁ et n₂ illustrées sur la vue (a) de la figure 7). Le vecteur directeur est alors calculé par recherche du vecteur perpendiculaire au maximum de normales du nuage N de points.

Une fois le vecteur directeur extrait, l'unité 61 de traitement implémente une projection des points du nuage N de points dans un plan perpendiculaire au vecteur directeur extrait, suivie d'une conversion des points projetés en une image et d'une identification d'une forme géométrique plane dans l'image issue de la conversion. Dans l'exemple de la figure 7, la vue (b) illustre les points du nuage N de points après projection, ainsi que la forme géométrique plane 7 identifiée qui correspond ici à un anneau circulaire.

La première modélisation tridimensionnelle 8 représentative du profilé avant coupe est ensuite construite par extrusion rectiligne de la forme géométrique plane 7 identifiée selon le vecteur directeur extrait. Dans l'exemple de la figure 7, la vue (c) illustre cette première modélisation tridimensionnelle ainsi reconstruite (dans l'exemple un cylindre 8) superposée au nuage N de points. Il est possible d'améliorer la première modélisation tridimensionnelle 8 obtenue en optimisant ses paramètres (en particulier le vecteur directeur et/ou les diamètres internes et externes pour un profilé creux cylindrique) pour minimiser la distance moyenne de chaque point du nuage N de points à la modélisation tridimensionnelle 8. Il convient de noter à ce stade que la forme géométrique plane peut être extraite par extrapolation, ce qui permet avantageusement d'identifier cette forme géométrique même dans les cas où les points projetés ne permettent d'identifier qu'une portion de cette forme géométrique (par exemple une ou plusieurs portions d'anneau circulaire. En effet, comme indiqué précédemment, il n'existe qu'un nombre limité de formes géométriques définissant la section d'un profilé (carré, triangle, disque, cercle, rectangle, octogone, losange, trapèze, ovale, ellipse, pentagone ou hexagone).

L'unité 61 de traitement va ensuite s'attacher à déterminer (étape 140 sur la figure 5), toujours à partir du nuage N de points, une deuxième modélisation tridimensionnelle 10 représentative cette fois-ci de la géométrie de coupe, orientée selon l'angle de coupe, qui a été utilisée pour couper le profilé 1 (voir vues (d) et (e) de la figure 7).

Pour ce faire, l'unité 61 de traitement peut par exemple réaliser une segmentation de la première modélisation tridimensionnelle 8 représentative du profilé avant coupe en une pluralité de zones réparties angulairement autour de l'axe longitudinal du profilé, puis rechercher, dans chaque zone, le point du nuage N de points situé le plus haut le long de l'axe longitudinal du profilé. La vue (d) de la figure 7 illustre par exemple le point P₁ situé le plus haut pour une zone 9 de segmentation de la modélisation 8. La vue (e) de la figure 7 illustre quatre de ces points P₁ à P₄. L'ensemble des points trouvés est situé sur une surface 10 qui définit la géométrie de coupe et l'angle de coupe utilisés, en l'occurrence un plan 10 incliné dans le cas de la figure 7.

L'unité 61 de traitement va ensuite déterminer par calcul (étape 150 sur la figure 5), l'intersection géométrique entre la première modélisation tridimensionnelle 8 et la deuxième modélisation tridimensionnelle 10. La résultante de cette intersection est une troisième modélisation tridimensionnelle qui est représentative du ou des contours ou arêtes à ébavurer à l'extrémité du profilé. La vue (f) de la figure 7 illustre les traces 11 et 12 résultant de l'intersection entre la modélisation 8 représentative du profilé avant coupe et de la modélisation 10 représentative de la géométrie et de l'angle de coupe. Les traces 11 et 12 correspondent respectivement au contour externe et au contour interne de la surface d'extrémité du profilé, correspondant, dans le cas du profilé creux, aux contours à ébavurer. Bien entendu, dans le cas où le profilé à ébavurer est un profilé plein, seule une modélisation tridimensionnelle représentative du contour externe à ébavurer peut être déterminée. Dans tous les cas, la troisième modélisation tridimensionnelle obtenue, représentative du ou des contours à ébavurer, peut être affinée pour tenir compte d'éventuelles déformations qu'aurait pu subir le profilé lors de sa coupe. En effet, en superposant la troisième modélisation tridimensionnelle obtenue au nuage de points, certains points du nuage N de points peuvent permettre d'identifier ces éventuelles déformations, et d'adapter la troisième modélisation tridimensionnelle en conséquence.

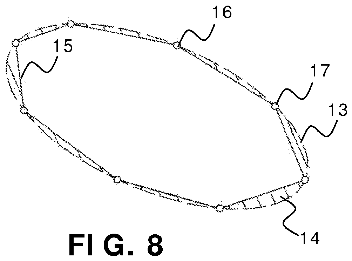

Une fois que la troisième modélisation tridimensionnelle représentative des contours externe et interne à ébavurer sur le profil 1 a été obtenue, le procédé se poursuit en sélectionnant un sous-ensemble de points dans cette troisième modélisation tridimensionnelle (étape 160 sur la figure 5). Cette opération s'effectue de préférence également au niveau de l'unité 61 de traitement. Dans le cas où cette unité 61 de traitement fait partie du dispositif électronique 6 distinct du système 5 d'ébavurage, ce sous-ensemble de points sélectionnés est transmis par le dispositif 6 au système 5 d'ébavurage par le module 62 de communication. Afin d'économiser en bande passante sur les données transmises, le nombre de points sélectionnés dans le sous-ensemble est réduit au minimum. Les points sont de préférence sélectionnés en prenant en compte la connaissance a priori des possibilités dans les déplacements élémentaires du bras robotisé 50 (par exemple déplacements rectilignes et/ou selon des arcs de cercle) et/ou des possibilités d'orientation de l'outil d'ébavurage. La figure 8 illustre un principe possible de la sélection de points à partir d'une troisième modélisation tridimensionnelle représentative, à titre d'exemple non limitatif, d'un contour elliptique 13 à ébavurer, en considérant que le bras robotisé ne peut être déplacé qu'en lignes droites. Sur la figure 8, la surface hachurée 14 est représentative de l'erreur entre une trajectoire 15 susceptible d'être adoptée par le bras robotisé (succession de segments de droite reliant chacun deux points successifs tels que les points référencés 16 et 17), et la trajectoire idéale correspondant au contour elliptique 13. La sélection optimum de points consiste à trouver les points et le nombre minimum de points permettant de minimiser l'erreur, en d'autre termes de minimiser la taille de la surface hachurée 14. Il est plus précisément possible de procéder par itération sur le nombre de points, en choisissant d'abord deux points initiaux, et d'optimiser, pour chaque nombre de point d'une itération, les points qui permettent d'obtenir une erreur minimum, jusqu'à l'obtention d'une erreur de seuil prédéfinie.

Dans tous les cas, le contrôleur 52 du système 5 d'ébavurage va pouvoir déterminer la trajectoire d'ébavurage à partir du sous-ensemble de points sélectionnés et commander le déplacement de l'outil 51 d'ébavurage selon cette trajectoire d'ébavurage (étape 170 de la figure 5).

Il convient de noter que les calculs et modélisations intervenant dans les étapes 120 à 160 sont effectués de préférence dans un repère tridimensionnel lié à la caméra 60 de profondeur. La trajectoire d'ébavurage sera déterminée par le contrôleur 52 dans un repère tridimensionnel lié au système 5 d'ébavurage.

L'exposé ci-dessus a été fait dans le cadre où la pièce à ébavurer comportait un seul profilé. Bien entendu, le procédé est applicable également pour toute pièce comportant plusieurs profilés à ébavurer. En effet, les étapes de traitement 120 à 160 peuvent être réalisées pour tous les profilés visibles sur les images capturées par la caméra 60 de profondeur. Par ailleurs, différentes pièces comportant un ou plusieurs profilés peuvent être traitées puis ébavurées soit l'une après l'autre, soit simultanément.

D'autres étapes de traitement non représentées sur la figure 5 peuvent être ajoutées sans départir du cadre de la présente invention. Par exemple, on peut prévoir de réaliser, entre l'étape 120 à l'issue de laquelle un nuage de points, résultant éventuellement de la fusion de plusieurs nuages de points, et l'étape 130, une étape de prétraitement visant notamment à enlever du nuage N de points tous les points superflus (par exemple ceux illustrant le dispositif de calage de la pièce).

Enfin, comme cela a été évoqué précédemment, dans le cas où il est prévu que le dispositif électronique 6 soit placé sur le bras robotisé, dans la configuration illustrée sur la figure 3, et qu'il alors possible de déplacer ce dispositif 6 électronique selon une trajectoire prédéterminée, il est possible de remplacer la caméra de profondeur par un scanner de profil. Dans ce cas, l'étape 120 est implémentée en générant le nuage de points à partir d'une pluralité de scans acquis par le scanner de profil lors du déplacement du bras robotisé. Le traitement de ce nuage de points tel qu'explicité en référence aux étapes 130 à 170 de la figure 5, et aux exemples de la figure 6 est inchangé.

## Revendications

1. Procédé (100) de contrôle automatique d'un système (5) d'ébavurage de pièces comprenant un bras robotisé (50) portant un outil (51) d'ébavurage, et un contrôleur (52) du bras robotisé (50) apte à commander un déplacement de l'outil (51) d'ébavurage lors d'une opération d'ébavurage, ledit procédé (100) comportant les étapes suivantes :
- fixer (110) au moins une pièce à ébavurer à un dispositif (53) de calage dudit système (5) d'ébavurage, ladite au moins une pièce à ébavurer comprenant au moins un profilé (1) s'étendant selon un axe longitudinal (2) et dont une extrémité a été préalablement coupée par un outil de coupe selon une géométrie de coupe et un angle de coupe par rapport à l'axe longitudinal (2) du profilé (1) ;
- scanner in situ (120) ladite pièce à ébavurer au moyen d'un dispositif (60) de vision tridimensionnelle de façon à générer (120) un nuage (N) de points à partir d'au moins une numérisation représentative de ladite pièce à ébavurer pour une position donnée du dispositif (60) de vision tridimensionnel;
- déterminer (130), à partir du nuage (N) de points, une première modélisation tridimensionnelle (8) représentative du profilé avant coupe ;
- déterminer (140), à partir du nuage (N) de points, une deuxième modélisation tridimensionnelle (10) représentative de la géométrie de coupe orientée selon l'angle de coupe;
- déterminer (150) une troisième modélisation tridimensionnelle représentative d'au moins un contour (11, 12) de l'extrémité du profilé à ébavurer par calcul de l'intersection géométrique entre la première modélisation tridimensionnelle (8) et la deuxième modélisation tridimensionnelle (10);
- sélectionner (160) un sous-ensemble de points dans la troisième modélisation tridimensionnelle représentative dudit au moins un contour (11, 12);
- commander (170) le déplacement de l'outil (51) d'ébavurage selon une trajectoire d'ébavurage déterminée à partir du sous-ensemble de points sélectionnés.

2. Procédé (100) selon la revendication 1, **caractérisé en ce que** l'étape (130) de détermination de la première modélisation tridimensionnelle (8) représentative du profilé avant coupe comprend :
- une sous-étape d'extraction, à partir du nuage (N) de points, d'un vecteur directeur représentatif de l'axe longitudinal (2) du profilé (1) ;
- une sous-étape de projection des points du nuage (N) de points dans un plan perpendiculaire au vecteur directeur extrait, de conversion des points projetés en une image et d'identification d'une forme géométrique plane (7) dans l'image issue de la conversion ;
- une sous-étape de construction de la première modélisation tridimensionnelle (8) par extrusion rectiligne de la forme géométrique plane (7) identifiée selon le vecteur directeur extrait.

3. Procédé (100) selon l'une quelconque des revendications précédentes, **caractérisé en ce que** l'étape (140) de détermination de la deuxième modélisation tridimensionnelle (10) représentative de la géométrie de coupe orientée selon l'angle de coupe comprend :
- une sous-étape de segmentation de la première modélisation tridimensionnelle (8) représentative du profilé avant coupe en une pluralité de zones (9) réparties angulairement autour de l'axe longitudinal (2) du profilé (1);
- la recherche, dans chaque zone (9), du point du nuage (N) de points situé le plus haut le long de l'axe longitudinal (2) du profilé (1).

4. Procédé (100) selon l'une quelconque des revendications précédentes, **caractérisé en ce que**, lors de l'étape (120) de scan, plusieurs numérisations représentatives de la pièce à ébavurer sont acquises pour différentes positions et/ou orientations du dispositif (60) de vision tridimensionnelle par rapport à ladite pièce, les nuages (N₁, N₂) de points associés aux numérisations acquises étant fusionnés pour générer ledit nuage de points.

5. Procédé (100) selon l'une quelconque des revendications précédentes, **caractérisé en ce qu'**au moins les étapes de scan (120), de déterminations (130, 140, 150) de la première, deuxième et troisième modélisations tridimensionnelles, et de sélection (160) d'un sous-ensemble de points sont réalisées par un dispositif électronique (6) de contrôle automatique apte à coopérer avec le système (5) d'ébavurage de pièces, et **en ce que** le procédé (100) comprend en outre une étape de transmission, par le dispositif électronique (6) de contrôle automatique vers le système (5) d'ébavurage de pièces, du sous-ensemble de points sélectionnés dans la troisième modélisation tridimensionnelle, et une étape de détermination, par le contrôleur (52) du bras robotisé, de la trajectoire d'ébavurage à partir du sous-ensemble de points sélectionnés transmis.

6. Dispositif électronique (6) de contrôle automatique d'un système (5) d'ébavurage de pièces, ledit système (5) comprenant un bras robotisé (50) portant un outil (51) d'ébavurage, et un contrôleur (52) du bras robotisé (50) apte à commander un déplacement de l'outil (51) d'ébavurage lors d'une opération d'ébavurage, ledit dispositif électronique (6) étant **caractérisé en ce qu'**il comporte:
- un dispositif (60) de vision tridimensionnelle apte à acquérir in situ au moins une numérisation représentative d'au moins une pièce à ébavurer fixée à un dispositif (53) de calage dudit système (5) d'ébavurage, ladite au moins une pièce à ébavurer comprenant au moins un profilé (1) s'étendant selon un axe longitudinal (2) et dont une extrémité a été préalablement coupée par un outil de coupe selon une géométrie de coupe et un angle de coupe par rapport à l'axe longitudinal (2) du profilé (1);
- une unité (61) de traitement configurée pour :
• générer un nuage (N) de points de ladite au moins numérisation acquise,
• déterminer, à partir du nuage (N) de points, une première modélisation tridimensionnelle (8) représentative du profilé avant coupe,
• déterminer, à partir du nuage (N) de points, une deuxième modélisation tridimensionnelle (10) représentative de la géométrie de coupe orientée selon l'angle de coupe,
• déterminer une troisième modélisation tridimensionnelle représentative d'au moins un contour (11, 12) de l'extrémité du profilé à ébavurer par calcul de l'intersection géométrique entre la première modélisation tridimensionnelle (8) et la deuxième modélisation tridimensionnelle (10), et
• sélectionner un sous-ensemble de points dans la troisième modélisation tridimensionnelle représentative dudit au moins un contour (11, 12); et
- un module (62) de communication configuré pour transmettre le sous-ensemble de points sélectionnés au système (5) d'ébavurage pour permettre la détermination d'une trajectoire d'ébavurage à suivre par l'outil d'ébavurage.

7. Dispositif électronique (6) selon la revendication 6, **caractérisé en ce qu'**il est en outre configuré pour être fixé au bras robotisé (50) de manière à pouvoir être déplacé selon une trajectoire prédéfinie autour de la pièce à ébavurer, et pour contrôler le dispositif (60) de vision tridimensionnelle de manière à acquérir une succession de numérisations représentatives de la pièce à ébavurer lors du déplacement du dispositif électronique (6) selon ladite trajectoire prédéfinie, et **en ce que** l'unité (31) de traitement est configurée pour générer le nuage de points en fusionnant les numérisations de ladite succession de numérisation.

8. Dispositif électronique (6) selon la revendication 7, **caractérisé en ce que**, chaque numérisation de la succession de numérisations étant prise à une position d'arrêt du dispositif électronique (6) lors de son déplacement selon la trajectoire prédéfinie, le dispositif électronique (6) comporte en outre un dispositif (63, 64) de détection de chaque position d'arrêt.

9. Dispositif électronique (6) selon la revendication 8, **caractérisé en ce que** le dispositif de détection des positions d'arrêt comprend une centrale inertielle (63).

10. Dispositif électronique (6) selon la revendication 8, **caractérisé en ce que** le dispositif de détection des positions d'arrêt comprend une caméra RGB (64).

11. Dispositif électronique (6) selon l'une quelconque des revendications 6 à 10, **caractérisé en ce que** le dispositif (60) de vision tridimensionnelle est une caméra de profondeur, chaque numérisation acquise étant une image capturée par la caméra de profondeur.

12. Dispositif électronique (6) selon l'une quelconque des revendications 6 à 10, **caractérisé en ce que** le dispositif (60) de vision tridimensionnelle est un scanner de profil.

13. Dispositif électronique (6) selon l'une quelconque des revendications 6 à 12, **caractérisé en ce que** le module (62) de communication est apte à échanger des données avec le système (5) d'ébavurage par l'intermédiaire d'une liaison filaire ou sans fil.

14. Dispositif électronique (6) selon l'une quelconque des revendications 6 à 13, **caractérisé en ce que** le module (62) de communication est apte à échanger des données avec le système (5) d'ébavurage selon le protocole TCP/IP.

## Patentansprüche

1. Verfahren (100) zur automatischen Steuerung eines Entgratungssystems (5) von Werkstücken, umfassend einen Roboterarm (50), der ein Entgratungswerkzeug (51) trägt, und eine Steuerung (52) des Roboterarms (50), die geeignet ist, um eine Bewegung des Entgratungswerkzeugs (51) bei einem Entgratungsvorgang zu steuern, das Verfahren (100) umfassend die folgenden Schritte:
- Befestigen (110) mindestens eines zu entgratenden Werkstücks an einer Festklemmvorrichtung (53) des Entgratungssystems (5), das mindestens eine zu entgratende Werkstück umfassend mindestens ein Profil (1), das sich entlang einer Längsachse (2) erstreckt und wovon ein Ende zuvor durch ein Schneidwerkzeug gemäß einer Schnittgeometrie und einem Schnittwinkel in Bezug auf die Längsachse (2) des Profils (1) abgeschnitten worden ist;
- *in-situ*-Scannen (120) des zu entgratenden Werkstücks mittels einer dreidimensionalen Sichtvorrichtung (60), um anhand mindestens einer repräsentativen Digitalisierung des zu entgratenden Werkstücks eine Punktwolke (N) für eine gegebene Position der dreidimensionalen Sichtvorrichtung (60) zu erzeugen (120);
- Bestimmen (130), anhand der Punktewolke (N), einer ersten dreidimensionalen Modellierung (8), die repräsentativ für das Profil vor einem Schneiden ist;
- Bestimmen (140), anhand der Punktewolke (N), einer zweiten dreidimensionalen Modellierung (10), die repräsentativ für die Schnittgeometrie ist, die entlang des Schnittwinkels ausgerichtet ist;
- Bestimmen (150) einer dritten dreidimensionalen Modellierung, die repräsentativ für mindestens eine Kontur (11, 12) des zu entgratenden Endes des Profils ist, durch Berechnen des geometrischen Schnittpunkts zwischen der ersten dreidimensionalen Modellierung (8) und der zweiten dreidimensionalen Modellierung (10);
- Auswählen (160) einer Teilmenge von Punkten in der dritten dreidimensionalen Modellierung, die repräsentiert für die mindestens eine Kontur (11, 12) ist;
- Steuern (170) der Bewegung des Entgratungswerkzeugs (51) entlang einer Entgratungsbahn, die anhand der Teilmenge ausgewählter Punkte bestimmt wird.

2. Verfahren (100) nach Anspruch 1, **dadurch gekennzeichnet, dass** der Bestimmungsschritt (130) der ersten dreidimensionalen Modellierung (8), die repräsentativ für das Profil vor einem Schneiden ist, Folgendes umfasst:
- einen Teilschritt eines Extrahierens, anhand der Punktwolke (N), eines Leitvektors, der repräsentativ für die Längsachse (2) des Profils (1) ist;
- einen Teilschritt eines Projizierens der Punkte der Punktwolke (N) in eine Ebene senkrecht zu dem extrahierten Leitvektor, eines Umwandelns der projizierten Punkte in ein Bild und eines Identifizierens einer ebenen geometrischen Form (7) in dem Bild, das aus der Umwandlung hervorgeht;
- einen Teilschritt eines Konstruierens der ersten dreidimensionalen Modellierung (8) durch geradliniges Extrudieren der identifizierten ebenen geometrischen Form (7) gemäß dem extrahierten Leitvektor.

3. Verfahren (100) nach einem der vorherigen Ansprüche, **dadurch gekennzeichnet, dass** der Bestimmungsschritt (140) der zweiten dreidimensionalen Modellierung (10), die repräsentativ für die Schnittgeometrie ist, die entlang des Schnittwinkels ausgerichtet ist, Folgendes umfasst:
- einen Teilschritt eines Segmentierens der ersten dreidimensionalen Modellierung (8), die repräsentativ für das Profil vor einem Schneiden ist, in eine Vielzahl von Bereichen (9), die winkelmäßig um die Längsachse (2) des Profils (1) verteilt sind;
- die Suche, in jedem Bereich (9), des Punkts der Punktwolke (N), der entlang der Längsachse (2) des Profils (1) am höchsten ist.

4. Verfahren (100) nach einem der vorherigen Ansprüche, **dadurch gekennzeichnet, dass** bei dem Scan-Schritt (120) mehrere Digitalisierungen, die repräsentativ für das zu entgratende Werkstück sind, für verschiedene Positionen und/oder Ausrichtungen der Vorrichtung (60) für dreidimensionale Sicht in Bezug auf das Werkstück erfasst werden, wobei die Punktwolken (N1, N2), die mit den erfassten Digitalisierungen assoziiert sind, zusammengeführt werden, um die Punktwolke zu erzeugen.

5. Verfahren (100) nach einem der vorherigen Ansprüche, **dadurch gekennzeichnet, dass** zumindest die Scan-Schritte (120), zum Bestimmen (130, 140, 150) der ersten, der zweiten und der dritten dreidimensionalen Modellierung und Auswählen (160) einer Teilmenge von Punkten durch eine elektronische Vorrichtung (6) zur automatischen Steuerung werden, die geeignet ist, um mit dem Entgratungssystem (5) von Werkstücken zusammenzuwirken, und dass das Verfahren (100) ferner einen Übertragungsschritt, durch eine elektronische Vorrichtung (6) zur automatischen Steuerung zu dem Entgratungssystem (5) von Werkstücken, der Teilmenge von Punkten, die in der dritten dreidimensionalen Modellierung ausgewählt werden, und einen Bestimmungsschritt, durch die Steuerung (52) des Roboterarms, der Entgratungsbahn anhand der übertragenen Teilmenge von ausgewählten Punkte umfasst.

6. Elektronische Vorrichtung (6) zur automatischen Steuerung eines Entgratungssystems (5) von Werkstücken, das System (5) umfassend einen Roboterarm (50), der ein Entgratungswerkzeug (51) trägt, und eine Steuerung (52) des Roboterarms (50), die geeignet ist, um eine Bewegung des Entgratungswerkzeugs (51) bei einem Entgratungsvorgangs zu steuern, wobei die elektronische Vorrichtung (6) **dadurch gekennzeichnet ist, dass** sie Folgendes umfasst:
- eine dreidimensionale Sichtvorrichtung (60), die geeignet ist, um *in situ* mindestens eine repräsentative Digitalisierung von mindestens einem zu entgratenden Werkstück zu erfassen, das an einer Festklemmvorrichtung (53) des Entgratungssystems (5) befestigt ist, das mindestens eine zu entgratende Werkstück umfassend mindestens ein Profil (1), das sich entlang einer Längsachse (2) erstreckt und wovon ein Ende zuvor durch ein Schneidwerkzeug gemäß einer Schnittgeometrie und einem Schnittwinkel in Bezug auf die Längsachse (2) des Profils (1) abgeschnitten worden ist;
- eine Verarbeitungseinheit (61), die zu Folgendem konfiguriert ist:
• Erzeugen einer Punktwolke (N) der mindestens einen erfassten Digitalisierung,
• Bestimmen, anhand der Punktewolke (N), einer ersten dreidimensionalen Modellierung (8), die repräsentativ für das Profil vor einem Schneiden ist;
• Bestimmen, anhand der Punktewolke (N), einer zweiten dreidimensionalen Modellierung (10), die repräsentativ für die Schnittgeometrie ist, die entlang des Schnittwinkels ausgerichtet ist;
• Bestimmen einer dritten dreidimensionalen Modellierung, die repräsentativ für mindestens eine Kontur (11, 12) des zu entgratenden Endes des Profils ist, durch Berechnen des geometrischen Schnittpunkts zwischen der ersten dreidimensionalen Modellierung (8) und der zweiten dreidimensionalen Modellierung (10), und
• Auswählen einer Teilmenge von Punkten in der dritten dreidimensionalen Modellierung, die repräsentiert für die mindestens eine Kontur (11, 12) ist; und
- ein Kommunikationsmodul (62), das konfiguriert ist, um die ausgewählte Teilmenge von Punkten an das Entgratungssystem (5) zu übertragen, um die Bestimmung einer Entgratungsbahn zu ermöglichen, dem das Entgratungswerkzeug folgen soll.

7. Elektronische Vorrichtung (6) nach Anspruch 6, **dadurch gekennzeichnet, dass** sie ferner konfiguriert ist, um an dem Roboterarm (50) befestigt zu sein, um entlang einer Bahn bewegt zu werden, die um das zu entgratende Werkstück vordefiniert ist, und um die dreidimensionale Sichtvorrichtung (60) zu steuern, um eine Abfolge von Digitalisierungen zu erfassen, die repräsentativ für das zu entgratende Werkstück während der Bewegung der elektronischen Vorrichtung (6) entlang der vordefinierten Bahn sind, und dass die Verarbeitungseinheit (31) konfiguriert ist, um die Punktwolke durch Zusammenführen der Digitalisierungen der Abfolge von Digitalisierungen zu erzeugen.

8. Elektronische Vorrichtung (6) nach Anspruch 7, **dadurch gekennzeichnet, dass**, da jede Digitalisierung der Abfolge von Digitalisierungen an einer Halteposition der elektronischen Vorrichtung (6) während ihrer Bewegung entlang der vordefinierten Bahn aufgenommen wird, wobei die elektronische Vorrichtung (6) ferner eine Erfassungsvorrichtung (63, 64) jeder Halteposition umfasst.

9. Elektronische Vorrichtung (6) nach Anspruch 8, **dadurch gekennzeichnet, dass** die Erfassungsvorrichtung von Haltepositionen eine Trägheitszentrale (63) umfasst.

10. Elektronische Vorrichtung (6) nach Anspruch 8, **dadurch gekennzeichnet, dass** die Erfassungsvorrichtung von Haltepositionen eine RGB-Kamera (64) umfasst.

11. Elektronische Vorrichtung (6) nach einem der Ansprüche 6 bis 10, **dadurch gekennzeichnet, dass** die dreidimensionale Sichtvorrichtung (60) eine Tiefenkamera ist, wobei jede erfasste Digitalisierung ein Bild ist, das von der Tiefenkamera erfasst wird.

12. Elektronische Vorrichtung (6) nach einem der Ansprüche 6 bis 10, **dadurch gekennzeichnet**, die dreidimensionale Sichtvorrichtung (60) ein Profilscanner ist.

13. Elektronische Vorrichtung (6) nach einem der Ansprüche 6 bis 12, **dadurch gekennzeichnet, dass** das Kommunikationsmodul (62) geeignet ist, um über eine drahtgebundene oder drahtlose Verbindung Daten mit dem Entgratungssystem (5) auszutauschen.

14. Elektronische Vorrichtung (6) nach einem der Ansprüche 6 bis 13, **dadurch gekennzeichnet, dass** das Kommunikationsmodul (62) geeignet ist, Daten mit dem Entgratungssystem (5) gemäß dem TCP/IP-Protokoll auszutauschen.

## Claims

1. A method (100) for automatic control of a system (5) for deburring parts comprising a robotic arm (50) carrying a deburring tool (51), and a controller (52) of the robotic arm (50) capable of controlling a movement of the deburring tool (51) during a deburring operation, said method (100) comprising the following steps:
- attaching (110) at least one part to be deburred to a wedging device (53) of said deburring system (5), said at least one part to be deburred comprising at least one profile (1) extending along a longitudinal axis (2) and one end of which has been previously cut by a cutting tool according to a cutting geometry and a cutting angle relative to the longitudinal axis (2) of the profile (1);
- scanning in situ (120) said part to be deburred by means of a three-dimensional viewing device (60) so as to generate (120) a cloud (N) of points from at least one representative digitization of said part to be deburred for a given position of the three-dimensional viewing device (60);
- determining (130), from the cloud (N) of points, a first three-dimensional model (8) representative of the profile before cutting;
- determining (140), from the cloud (N) of points, a second three-dimensional model (10) representative of the cutting geometry oriented according to the cutting angle;
- determining (150) a third three-dimensional model representative of at least one contour (11, 12) of the end of the profile to be deburred by calculating the geometric intersection between the first three-dimensional model (8) and the second three-dimensional model (10);
- selecting (160) a subset of points in the third three-dimensional model representative of said at least one contour (11, 12);
- controlling (170) the movement of the deburring tool (51) along a deburring trajectory determined from the subset of selected points.

2. The method (100) according to claim 1, **characterized in that** the step (130) of determining the first three-dimensional model (8) representative of the profile before cutting comprises:
- a sub-step of extracting, from the cloud (N) of points, a direction vector representative of the longitudinal axis (2) of the profile (1);
- a sub-step of projecting the points of the cloud (N) of points in a plane perpendicular to the extracted director vector, converting the projected points into an image and identifying a plane geometric shape (7) in the image resulting from the conversion;
- a sub-step of constructing the first three-dimensional model (8) by rectilinear extrusion of the plane geometric shape (7) identified according to the extracted director vector.

3. The method (100) according to any one of the preceding claims, **characterized in that** the step (140) of determining the second three-dimensional model (10) representative of the cutting geometry oriented according to the cutting angle comprises:
- a sub-step of segmenting the first three-dimensional model (8) representative of the profile before cutting into a plurality of zones (9) distributed angularly about the longitudinal axis (2) of the profile (1);
- searching, in each zone (9), for the point of the cloud (N) of points located highest along the longitudinal axis (2) of the profile (1).

4. The method (100) according to any one of the preceding claims, **characterized in that**, during the scanning step (120), several digitizations representative of the part to be deburred are acquired for different positions and/or orientations of the three-dimensional viewing device (60) with respect to said part, the clouds (N₁, N₂) of points associated with the digitizations acquired being merged to generate said cloud of points.

5. The method (100) according to any one of the preceding claims, **characterized in that** at least the steps of scanning (120), determining (130, 140, 150) the first, second and third three-dimensional models, and selecting (160) a subset of points are carried out by an electronic automatic control device (6) capable of cooperating with the system (5) for deburring parts, and **in that** the method (100) further comprises a step of transmission, by the automatic electronic control device (6) to the part deburring system (5), of the subset of points selected in the third three-dimensional model, and a step of determining, by the controller (52) of the robotic arm, the deburring trajectory from the transmitted subset of selected points.

6. An electronic device (6) for automatic control of a part deburring system (5), said system (5) comprising a robotic arm (50) carrying a deburring tool (51), and a controller (52) of the robotic arm (50) capable of controlling a movement of the deburring tool (51) during a deburring operation, said electronic device (6) being **characterized in that** it includes:
- a three-dimensional viewing device (60) capable of acquiring in situ at least one digitization representative of at least one part to be deburred attached to a wedging device (53) of said deburring system (5), said at least one part to be deburred comprising at least one profile (1) extending along a longitudinal axis (2) and one end of which has been cut beforehand by a cutting tool according to a cutting geometry and a cutting angle with respect to the longitudinal axis (2) of the profile (1);
- a processing unit (61) configured to:
• generate a cloud (N) of points of said at least one acquired digitization,
• determine, from the cloud (N) of points, a first three-dimensional model (8) representative of the profile before cutting,
• determine, from the cloud (N) of points, a second three-dimensional model (10) representative of the cutting geometry oriented according to the cutting angle,
• determine a third three-dimensional model representative of at least one contour (11, 12) of the end of the profile to be deburred by calculating the geometric intersection between the first three-dimensional model (8) and the second three-dimensional model (10), and
• select a subset of points in the third three-dimensional model representative of said at least one contour (11, 12); and
- a communication module (62) configured to transmit the subset of selected points to the deburring system (5) to allow the determination of a deburring trajectory to be followed by the deburring tool.

7. The electronic device (6) according to claim 6, **characterized in that** it is further configured to be attached to the robotic arm (50) so as to be able to be moved along a predefined trajectory around the part to be deburred, and to control the three-dimensional viewing device (60) so as to acquire a succession of digitizations representative of the part to be deburred during the movement of the electronic device (6) along said predefined trajectory, and **in that** the processing unit (31) is configured to generate the point cloud by merging the scans of said succession of scans.

8. The electronic device (6) according to claim 7, **characterized in that**, each digitization of the succession of digitizations being taken at a stop position of the electronic device (6) during its movement along the predefined trajectory, the electronic device (6) further comprises a device (63, 64) for detecting each stop position.

9. The electronic device (6) according to claim 8, **characterized in that** the stop position detection device comprises an inertial unit (63).

10. The electronic device (6) according to claim 8, **characterized in that** the stop position detection device comprises an RGB camera (64).

11. The electronic device (6) according to any one of claims 6 to 10, **characterized in that** the three-dimensional viewing device (60) is a depth camera, each digitization acquired being an image captured by the depth camera.

12. The electronic device (6) according to any one of claims 6 to 10, **characterized in that** the three-dimensional viewing device (60) is a profile scanner.

13. The electronic device (6) according to any one of claims 6 to 12, **characterized in that** the communication module (62) is capable of exchanging data with the deburring system (5) via a wired or wireless connection.

14. The electronic device (6) according to any one of claims 6 to 13, **characterized in that** the communication module (62) is capable of exchanging data with the deburring system (5) according to the TCP/IP protocol.
